# EUROPEAN PATENT SPECIFICATION

(11) **EP 4 276 409 B1**
(45) Date of publication and mention of the grant of the patent: **26.06.2024**
(21) Application number: 23170845.4
(22) Date of filing: 28.04.2023
(51) Int. Cl.: G01C 19/5607, G01P 15/08, G01P 15/097

(54) **SELECTIVE LASER ETCHING QUARTZ RESONATORS**
SELEKTIVE LASERÄTZUNG VON QUARZRESONATOREN
RESONATEURS A QUARTZ A GRAVURE SELECTIVE AU LASER

(30) Priority: 13.05.2022 US 202263364692 P; 25.05.2022 US 202263365301 P; 23.12.2022 US 202218146136
(43) Date of publication of application: 15.11.2023
(73) Proprietor: Honeywell International Inc., Charlotte, NC 28202 (US)
(72) Inventor: MILNE, James Christopher, Charlotte, 28202 (US); STREHLOW, John, Charlotte, 28202 (US)
(74) Representative: Haseltine Lake Kempner LLP

(56) References cited:
- EP-A1- 2 372 375
- EP-A1- 3 021 125
- EP-A1- 3 517 979
- US-A1- 2006 196 845
- HAN CHAO ET AL: "High-Stability Quartz Resonant Accelerometer With Micro-Leverages", JOURNAL OF MICROELECTROMECHANICAL SYSTEMS, IEEE SERVICE CENTER, US, vol. 30, no. 2, 12 January 2021 (2021-01-12), pages 184-192, XP011847857, ISSN: 1057-7157, DOI: 10.1109/JMEMS.2020.3036121 [retrieved on 2021-04-02]
- CLOWER WILLIAM ET AL: "Laser-Assisted Wet Etching of Quartz Crystal Resonators", JOURNAL OF MICROELECTROMECHANICAL SYSTEMS., vol. 27, no. 1, 1 February 2018 (2018-02-01), - 1 February 2018 (2018-02-01), pages 22-24, XP093079513, US ISSN: 1057-7157, DOI: 10.1109/JMEMS.2017.2785620 Retrieved from the Internet: URL:https://ieeexplore.ieee.org/stampPDF/g etPDF.jsp?tp=&arnumber=8248749&ref=>

## Description

### RELATED APPLICATIONS

This application relates to U.S. Provisional Application No. 63/365,301 filed May 25, 2022; this application relates to U.S. Provisional Application 63/364,692 filed May 13, 2022.

### TECHNICAL FIELD

The present disclosure relates to quartz resonators and vibrating beam accelerometers, also referred to as resonating beam accelerometers.

### BACKGROUND

Accelerometers function by detecting the displacement of a proof mass under inertial forces. One technique of detecting the force and acceleration is to measure the displacement of the mass relative to a frame. Another technique is to measure the force induced in resonators as they counteract inertial forces of the proof mass. The acceleration may, for example, be determined by measuring the change in the frequencies of the resonators due to the change in load generated by the Newtonian force of a proof mass experiencing acceleration.

EP 3021125 A1 relates to accelerometers.

HAN CHAO ET AL: "High-Stability Quartz Resonant Accelerometer With Micro-Leverages", JOURNAL OF MICROELECTROMECHANICAL SYSTEMS, IEEE SERVICE CENTER, US, vol. 30, no. 2, 12 January 2021 (2021-01-12), pages 184-192, relates to highly stable differential resonant accelerometer that is monolithically micro-machined from a piece of ultrapure, single z-cut crystal quartz.

EP 3517979 A1 relates to vibrating beam accelerometers, also referred to as resonating beam accelerometers.

EP 2372375 A1 relates to a method of making a resonating beam accelerometer.

US 2006/196845 A1 relates to a methods and apparatus for producing crystalline Quartz tuning-fork resonators using a deep reactive ion etching process.

GLOWER WILLIAM ET AL: "Laser-Assisted Wet Etching of Quartz Crystal Resonators", JOURNAL OF MICROELECTROMECHANICAL SYSTEMS., vol. 27, no. 1, 1 February 2018 (2018-02-01), pages 22-24, reports on the development of a laser-assisted wet etching process for quartz crystal resonators.

### SUMMARY

The invention is defined by independent apparatus claim 1 and independent method claim 8.

The disclosure describes selective laser etched quartz resonators, selective laser etched vibrating beam accelerometers (VBAs) and techniques for making laser etched quartz resonators and VBAs. For example, one or more of a first resonator and a second resonator may be formed by selective laser etching a quartz substate to reduce or eliminate asperities and unwanted crystal planes that are present on side walls of quartz resonators formed by wet-etching. In some examples, a VBA described herein may be comprised of a proof mass assembly comprised of a single material, e.g., a single crystalline quartz substrate. In some examples, the proof mass assembly may be laser etched from a single, monolithic quartz substrate. In other examples, the proof mass assembly may comprise components separately made from the same material and subsequently attached without the use of additional materials. For example, a resonator may be formed of crystalline quartz and laser welded to a proof mass and a proof mass support without the use of any bonding materials or bonding techniques subjecting the proof mass assembly to heat and pressure. Whether monolithically formed from the same substrate, or formed of the same material and subsequently laser welded, devices and techniques of the present disclosure describe proof mass assemblies comprising a single material providing reduced and/or zero differences of coefficient of thermal expansion (CTE) between the components of the proof mass assembly, providing improved motion sensing accuracy and sensor robustness. In some examples, a VBA may be comprised of a quartz substrate. In some examples, the quartz substrate may be a crystalline quartz substrate, a monolithic quartz substrate, or a monolithic crystalline quartz substrate.

In some examples, the disclosure describes a proof mass assembly comprising a quartz substrate, the quartz substrate comprising: a proof mass; a proof mass support; a flexure connecting the proof mass to the proof mass support, wherein the proof mass is configured to rotate relative to the proof mass support via the flexure; a first resonator connected to a first major surface of the proof mass and a first major surface of the proof mass support; and a second resonator connected to a second major surface of the proof mass and a second major surface of the proof mass support, wherein at least one of the proof mass, the proof mass support, the flexure, the first resonator, or the second resonator is formed by selective laser etching.

In other examples, the disclosure describes a method including selective laser etching a first resonator within a quartz substrate; and selective laser etching a second resonator within the quartz substrate.

In other examples, the disclosure describes a vibrating beam accelerometer including: at least one dampening plate and a proof mass assembly including: a proof mass; a proof mass support; a flexure connecting the proof mass to the proof mass support, wherein the proof mass is configured to rotate relative to the proof mass support via the flexure; a first resonator connected to a first major surface of the proof mass and a first major surface of the proof mass support; and a second resonator connected to a second major surface of the proof mass and a second major surface of the proof mass support, wherein the at least one dampening plate, the at least one strain isolator, and the proof mass assembly comprise crystalline quartz, and the proof mass assembly is formed within a quartz substrate by selective laser etching.

The details of one or more examples are set forth in the accompanying drawings and the description below. Other features, objects, and advantages will be apparent from the description and drawings, and from the claims.

### BRIEF DESCRIPTION OF THE FIGURES

FIG. 1A is a conceptual diagram illustrating a top view of an example proof mass assembly.
FIG. 1B is a conceptual diagram illustrating a cross-sectional side view of the example proof mass assembly of FIG. 1A along line AA-AA.
FIG. 2 is an enlarged schematic view of an example resonator.
FIGS. 3 is an enlarged schematic view of an example proof mass assembly of an example proof mass assembly including strain isolators.
FIG. 4 is a block diagram illustrating an accelerometer system.
FIG. 5 is a flow diagram illustrating an example technique of making a proof mass assembly.
FIG. 6A is an enlarged schematic view of an quartz resonator that is produced by wet-etching.
FIGS. 6B-6C are an enlarged schematic views of cross-section BB of FIG. 6A

### DETAILED DESCRIPTION

Navigation systems and positioning systems rely on the accuracy of accelerometers to perform critical operations in various environments. Due to the different types of materials used in producing such accelerometers, thermally induced strains (e.g., forces) may be imposed on the various components due to changing temperatures. These changes may cause errors and reduce the overall accuracy, precision, or sensitivity of the accelerometer. One source of thermally induced errors in vibrating beam accelerometers (VBAs) relates to the bonding mechanism between resonators of the VBA and the proof mass and proof mass support of the VBA. Such components are conventionally joined using an adhesive such as an epoxy material or braze, which has a higher rate of thermal expansion, e.g., a higher coefficient of thermal expansion (CTE), compared to the proof mass, the proof mass support, or the resonators. This differential volume change in response to changes in temperature can induce forces on the resonators, leading to inaccurate measurements.

Vibrating beam accelerometers (VBAs) may include components formed from the same material. For example, a proof mass assembly may be formed of, from, and/or within a monolithic crystalline quartz substrate. Current processing for quartz resonators uses masks on the top and bottom surfaces with the desired resonator pattern. The exposed quartz is then wet-etched, such as by using a hydrofluoric acid (HF) solution. However, due to the unique properties of quartz and its etching characteristics, wet-etching produces etch asperities on the side walls of the resonator. In some examples, wet-etching quartz may result in a triangular shaped asperity along the side walls of the tines of the resonator. The wet-etching of quartz often results in asymmetric aspirations for the tines as they may only occur on one side of the tine. A side wall etch aspiration on just one side of tines may cause the lateral bending neutral axis to be offset resulting in asymmetric elastic boundary conditions at the ends of the tines. This may reduce the ability of the resonator end configuration to eliminate end pumping during operation, which may increase cross coupling between the resonators. This may then drive activity dip bias errors. An asymmetric boundary conditions may also reduce the coupling coefficient between the tines and may cause the lateral tine displacement to be non-symmetric during operation. This may lead to a loss of quality factor ("Q") for the resonator.

In addition, wet-etching quartz may result in aspirations that occur asymmetrically at the ends or root of the tines and appear as multi-faceted corner fillets at the ends of tines. Multi-faceted corner fillets at the ends of tines may create stress risers, which may decrease the survivability of the resonator through high dynamic loading. The multi-faceted corner fillets at the ends of tines may also create differences in effective tine length, which may cause the individual tines to have slightly different uncoupled frequencies. This effect, in conjunction with reduced coupling between the tines, may cause the coupled common frequency for the resonator to have instabilities.

In some examples, current processing for forming quartz substrates uses standard laser ablation or standard laser cutting to remove material. In some examples, standard laser ablation or standard laser cutting may result in the remaining material becoming hot, which may result in the formation of cracks in the remaining material and unwanted changes in the material structure. The formation of cracks and unwanted changes in the material structure may result in decreased survivability under dynamic loading.

In some examples, as described in techniques herein, complex three-dimensional (3D) structures and/or features, e.g., shaped flexures, resonator beams, strain isolators, thermal isolators, dampening plates, or the like, may be monolithically formed in a single substrate, such as crystalline quartz, via selective laser etch (also referred to as a subtractive 3D laser printing).

In some examples, selective laser etching may selectively modify a portion of a material. In some examples, selective laser etching may selectively modify one or more characteristics of a portion of a material. In some examples, the modified portion of the material may be on a surface of the material, within the bulk of the material at a depth and/or distance from a surface of the material, or both. In some examples, the selective laser etching may selectively modify the structure of the portion of the material, e.g., converting from a first crystalline structure to a second, different, crystalline structure or to an amorphous or partially amorphous structure. In some examples, the selective laser etching may selectively modify a material property of the portion of the material, e.g., an index of refraction, a density, a thermal conductivity, a CTE, a harness, a dielectric constant, a Youngs modulus, a shear modulus, a bulk modulus, an elastic coefficient, a melting point, an apparent elastic limit, a molecular weight, or the like.

In some examples, the selective laser etching may selectively modify the portion of the material in preparation for removal of the material, e.g., via a subsequent wet-etch process. In some examples, the subsequent wet-etch process may remove the modified portions of the material by placing the treated material being placed in a wet bath, such as hydrofluoric acid or potassium hydroxide. The liquid in the wet bath, such as hydrofluoric acid or potassium hydroxide, may attack the modified portions of the material while not attacking the other portions of the material. For example, the hydrofluoric acid or potassium hydroxide may only attack and remove the portions of the material that were modified by the laser. For example, the selective laser etching may function as a 3D lithographic laser printing where the material, e.g., a crystalline quartz substrate, functions as a positive-tone resist. In some examples, the selective laser etching may comprise picosecond and/or femtosecond laser radiation, e.g., one or more picosecond and/or femtosecond laser pulses configured to irradiate the portion of the material. In some examples, a laser may modify a portion of the material to be removed by wet-etching, as described above, by applying one or more picosecond and/or femtosecond laser pulses configured to irradiate the portion of the material. In some examples, the short duration of pulses in the selective laser etching process may reduce or prevent cracks in the material being treated by the laser.

Accordingly, in some examples, unlike wet-etching, standard laser ablation, or standard laser cutting, the process of using a laser, such as a precision focused laser, to selective laser etch quartz to create quartz resonators may help produce straight, and/or substantially straight, vertical side walls of a resonator. In some examples, a resonator having straight, and/or substantially, straight vertical side walls may improve the ability for the resonator design or reduce or eliminate end pumping by keeping the end boundary conditions for both tines elastically symmetric. In some examples, a resonator having straight, and/or substantially straight, vertical side walls may improve coupling between the resonator tines and may maintain balanced lateral motion of the tines increasing Q for the resonator. In some examples, a resonator having straight, and/or substantially straight, vertical side walls may keep tine frequencies matched and strongly coupled, which may reduce the potential for coupled resonator frequency instability. In some examples, a resonator having straight, and/or substantially straight, vertical side walls may increase strength of the resonator to improve survivability under high dynamic loading.

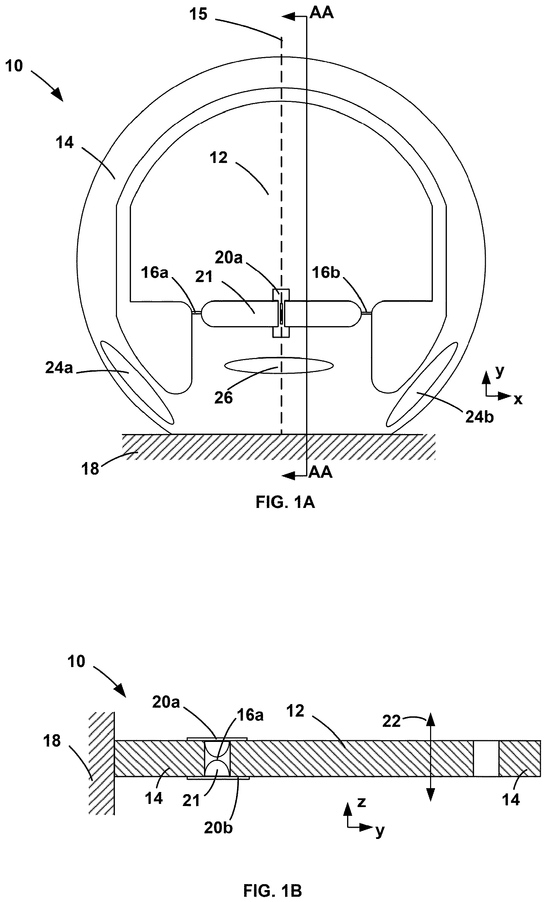

FIGS. 1A and 1B are conceptual diagrams illustrating a top view (FIG. 1A) and a cross-sectional side view (FIG. 1B, taken along line AA-AA of FIG. 1A) of an example proof mass assembly 10 that includes a proof mass 12 connected to proof mass support 14 by flexures 16a and 16b. Proof mass assembly 10 also includes at least two resonators 20a and 20b bridging a gap 21 between proof mass 12 and proof mass support 14. Resonators 20a and 20b (collectively "resonators 20") each have opposing ends connected to, integral with, mounted to, and/or attached to proof mass 12 and proof mass support 14, respectively. Proof mass assembly 10 may be a proof mass assembly of a VBA.

VBAs operate by monitoring the differential change in frequencies between resonators 20a and 20b. Each of resonators 20a and 20b, also referred to as double ended tuning forks (DETFs), will vibrate at a certain frequency depending on the resonator tine geometry, and material properties such as density and elastic modulus. The resonator is configured to change frequency as a function of the axial load or force (e.g., compression or tension exerted in the y-axis direction of FIGS. 1A and 1B) exerted on the respective resonator 20a or 20b. During operation, proof mass support 14 may be directly or indirectly mounted to an object 18 (e.g., aircraft, missile, orientation module, etc.) that undergoes acceleration or angle change and causes proof mass 12 to experience inertial displacements in a direction perpendicular to the plane defined by flexures 16a and 16b (e.g., in the direction of arrows 22 or in the direction of the z-axis of FIG. 1B). The deflection of proof mass 12 induces axial tension on one of resonators 20a and 20b and axial compression on the other depending on the direction of the force. The different relative forces on resonators 20a and 20b with alter the respective vibration frequencies of the resonators 20a and 20b. By measuring these changes, the direction and magnitude of the force exerted on object 18, and thus the acceleration, can be measured.

Proof mass assembly 10 according to the invention includes strain isolators 24a and 24b. It may further include one or more thermal isolators 26. According to the invention, strain isolators 24a and 24b are, and thermal isolator 26 may be connected to proof mass support 14 and configured to reduce a force (or strain), e.g., compression and or tension force, of at least one of proof mass 12, proof mass support 14, flexures 16a or 16b, or resonator 20a or 20b, e.g., upon application of a force (or stress) to the proof mass assembly, e.g., from an environmental change such as a temperature/humidity change and materials having different CTEs. For example, proof mass assembly 10 may be located in an environment subject to significant temperature and/or humidity changes, e.g., in a vehicle, aircraft, watercraft, spacecraft, or the like, and thermal isolator 26 may be configured deform, displace, or otherwise isolate proof mass assembly 10 from forces due to expansion or contraction of materials of proof mass assembly in response to changing temperature and/or humidity. In some examples, strain isolators 24a and 24b and/or thermal isolator 26 may be made of the same material, or otherwise have a CTE substantially the same as proof mass assembly 10 and/or one or more components of proof mass assembly 10, e.g., proof mass 12, flexures 16a or 16b, proof mass support 14, and/or resonators 20a or 20b. In some examples, strain isolators 24a and 24b and/or thermal isolator 26 may be monolithically formed within and/or from the same material, substrate, or the like, along with proof mass 12, flexures 16a and 16b, proof mass support 14, and resonators 20a or 20b. In other examples, strain isolators 24a and 24b and/or thermal isolator 26 may be separately formed from other components of proof mass assembly 10 and subsequently connected to proof mass support 14 without the use of a bonding adhesive such as an epoxy, e.g., via a laser weld.

In some examples, proof mass assembly 10 may include additional components that are used to induce an oscillating frequency across resonators 20a and 20b such as one or more electrical traces, piezoelectric drivers, electrodes, and the like, or other components that may be used with the final construction of the accelerometer such as stators, permanent magnets, capacitance pick-off plates, dampening plates, force-rebalance coils, and the like, which are not shown in FIGS. 1A and 1B. Such components may be incorporated on proof mass assembly 10 or the final accelerometer. In some examples, the accelerometer may not include stators, magnets, capacitance pick off plates, nor coils.

As shown in FIG. 1A, proof mass support 14 may be a planar ring structure that substantially surrounds proof mass 12 and substantially maintains flexures 16a and 16b and proof mass 12 in a common plane (e.g., the x-y plane of FIGS. 1A and 1B). Although proof mass support 14 as shown in FIG. 1A is a circular shape, it is contemplated that proof mass support 14 may be any shape (e.g., square, rectangular, oval, or the like) and may or may not surround proof mass 12.

Proof mass 12, proof mass support 14, and flexures 16 may be formed using any suitable material. In some examples, proof mass 12, proof mass support 14, and flexures 16 may be made of quartz, crystalline quartz, or any suitable material useable with a laser-aided etching process, such as selective laser etching, e.g., having a transparency useable with a selective laser etch configured to irradiate the material on a surface of the material or at a depth within the material. In some examples, proof mass 12, proof mass support 14, and flexures 16 may be made of the same material, e.g., crystalline quartz. In some examples, proof mass 12, proof mass support 14, and flexures 16 may be made monolithically from the same material, e.g., etched within and/or from the same substrate and/or blank. In other examples, proof mass 12, proof mass support 14, and flexures 16 may be made of different materials having substantially the same CTE and assembled and/or attached, e.g., via a laser weld. In some examples, such a laser weld may comprise a selective laser etch, e.g., fusing a portion of two components to attach the components to each other via irradiation by a picosecond and/or femtosecond laser.

In some examples, resonators 20a and 20b are made of a piezoelectric material, such as quartz (SiO₂). In some examples, resonators 20a and 20b may be made of a silicon-based material, such as fused silica.

In some examples, resonators 20a and 20b may be monolithically formed with proof mass 12, proof mass support 14, and flexures 16, e.g., within and/or from the same substrate and/or blank, such as a crystalline quartz substrate. In some examples, resonators 20a and 20b may comprise the same material as proof mass 12, proof mass support 14, and flexures 16, and attached and/or assembled with proof mass 12, proof mass support 14, and flexures 16, e.g., via laser welding.

In other examples, resonators 20a and 20b may comprise different materials from each other and/or proof mass 12, proof mass support 14, and flexures 16, and may be attached and/or assembled with proof mass 12, proof mass support 14, and flexures 16. For example, resonators 20a and 20b may comprise a material different from proof mass 12, proof mass support 14, and flexures 16, and having substantially the same CTE proof mass 12, proof mass support 14, and flexures 16.

In some examples, whether monolithically formed or assembled/attached without the use of other materials, e.g., adhesives, epoxies, or the like, resonators 20a and 20b, proof mass 12, proof mass support 14, and flexures 16 may have substantially the same CTE. In some examples, proof mass assembly 10 may comprise additional components (not shown) having substantially the same CTE as with resonators 20a and 20b, proof mass 12, proof mass support 14, and flexures 16, e.g., strain isolators, thermal isolators, dampening pates, or the like, and attached and/or assembled without the use of other materials, e.g., adhesives, epoxies, or the like. In some examples, such additional components may be made of the same material as resonators 20a and 20b, proof mass 12, proof mass support 14, and flexures 16, and in some examples such components may be monolithically formed from the same material substrate and/or blank along with resonators 20a and 20b, proof mass 12, proof mass support 14, and flexures 16.

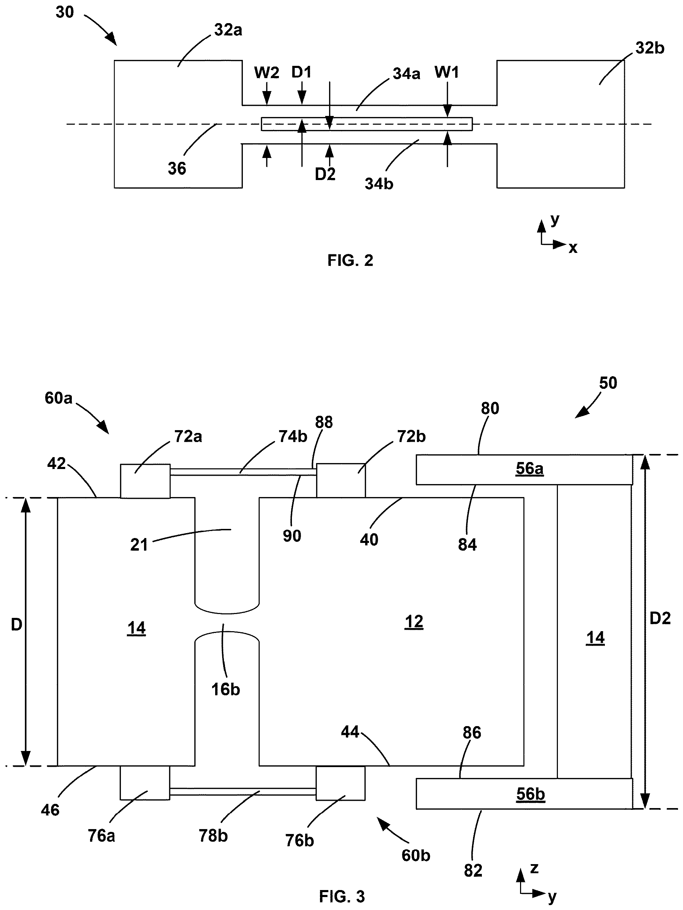

FIG. 2 is an enlarged schematic view of an example resonator 30 that includes a first and second pads 32a and 32b positioned at opposite ends of two elongated tines 34a and 34b that extend parallel to each other along a longitudinal axis 36 and separated by a width W1 for at least a portion of their length along longitudinal axis 36. In the example, shown, elongated tine 34a may have a width W3 and elongated tine 34b may have a width W4, and at least a portion of the length of resonator 30 along longitudinal axis 36 has a width W2. As described above, resonator 30 may be referred to as a DETF. In some examples, resonator 30 may be substantially the same as resonator 20a and/or resonator 20b of FIG. 1.

First and second pads 32a and 32b of resonator 30 may be monolithically etched within proof mass 12 and/or proof mass support 14, respectively. In some examples, first and second pads 32a and 32b of resonator 30 may be attached and/or laser welded to proof mass 12 and/or proof mass support 14, respectively, without using a bonding adhesive such as an epoxy.

FIG. 3 is conceptual diagrams illustrating a cross-sectional side view of an example proof mass assembly 50 that includes a proof mass 12 connected to proof mass support 14 by flexures 16a and 16b. Proof mass assembly 50 may be substantially similar to proof mass assembly 10 except that resonators 60a and 60b include first and second pads 72a, 72b and 76a, 76b, respectively. The cross-sectional view of FIG. 3 is taken along line AA-AA similar to as in FIG. 1A. Resonators 60a and 60b (collectively "resonators 60") may be substantially similar to resonator 30 of FIG. 2, e.g., pads 72a and 76a may be substantially similar to pad 32a, pads 72b and 76b may be substantially similar to pad 32b, and times 74a (not shown), 74b, 78a (not shown), and 78b may be substantially similar to tines 34a and 34b, respectively as shown. In the examples shown, proof mass assembly 50 also includes dampening plates 56a and 56b connected to proof mass support 14. Resonators 60a and 60b of proof mass assembly 50 may bridge gap 21 between proof mass 12 and proof mass support 14. Resonators 60a and 60b each have opposing ends connected to, integral with, mounted to, and/or attached to proof mass 12 and proof mass support 14, respectively. Proof mass assembly 50 may be a proof mass assembly of a VBA.

In the example shown, resonator 60a is connected to surface 40 of proof mass 12 and surface 42 of proof mass support 14. Surfaces 40 and 42 may be major surfaces of proof mass 12 and proof mass support 14, respectively, e.g., top-side surfaces. Resonator 60b is connected to surface 44 of proof mass 12 and surface 46 of proof mass support 14. Surfaces 44 and 46 may be major surfaces of proof mass 12 and proof mass support 14, respectively, e.g., bottom-side surfaces. In the example shown, top surface 40 of proof mass 12 is opposite bottom surface 44, and top surface 42 of proof mass support 14 is opposite bottom surface 44. In the example shown, pads 72a, 72b and pads 76a, 76b are configured to connect and offset tines 74a, 74b, 78a, and 78b, from proof mass support 14 and proof mass assembly 12, e.g., in the z-direction, e.g., the depth direction. For example, resonators 60a and 60b are not coplanar with each other, proof mass support 14 and proof mass assembly 12, e.g., resonators 60a and 60b are offset in the depth direction, e.g., the z-direction, from the thickness D (e.g., length D in the depth direction) of proof mass 12 and proof mass support 14. In the example shown, proof mass 12 and proof mass support 14 have the same thickness D. In other examples, proof mass 12 and proof mass support 14 may have different thicknesses, which may differ from the thicknesses of resonators 60a and 60b.

In some examples, resonators 60 may be offset relative to each other, e.g., from a center line of proof mass assembly 50 in the x-direction (not shown in FIG. 3). For example, and in reference to FIG. 1A, although resonators 20 are illustrated as being located at center line 15 of proof mass assembly 10, e.g., along the x-direction in FIG. 1A, in some examples resonator 20a is offset and/or displaced relative to resonator 20b along the x-direction. For example, resonator 20a may be connected to "top" surfaces of proof mass 12 and proof mass support 14 and offset in the x-direction relative to resonator 20b connected to the opposing "bottom" surfaces of proof mass 12 and proof mass support 14, e.g., resonator 20a may be located left of center line 15 and resonator 20b may be located right of center line 15. Similarly, resonator 60a may be offset and/or displaced relative to resonator 60b along the x-direction of proof mass assembly 50.

In some examples, proof mass 12 is configured to rotate relative to proof mass support 14 via flexures 16a and/or 16b, e.g., in the y-z plane. In the example shown, proof mass assembly 50 includes top dampening plate 56a and bottom dampening plate 56b, collectively "dampening plates 56." Dampening plates 56 are connected to proof mass support 14 and may be configured to limit a range of rotation, motion, and/or displacement of proof mass 12.

In some examples, resonators 60a and 60b are configured to have opposite compressive/tensile forces upon rotation of proof mass 12 in a particular direction in the y-z plane. For example, resonator 60a is connected to top surface 40 of proof mass 12 and top surface 42 of proof mass support 14 and is configured to have a tensile force upon "downward" rotation of proof mass 12, e.g., in the negative z-direction in the example shown. Resonator 60b is connected to bottom surface 44 of proof mass 12 and bottom surface 46 of proof mass support 14 and is configured to have a compressive force upon such downward rotation of proof mass 12. Upon upward rotation of proof mass 12, e.g., in the positive z-direction in the example shown, resonator 60a is configured to have a compressive force and resonator 60b is configured to have a tensile force. The compressive and tensile forces of resonators 60a and 60b change the resonant frequency of tines 74a, 74b and 78a, 78b, from which a VBA including proof mass assembly 50 may determine a direction (e.g., up or down in the example shown) and an acceleration and/or motion of proof mass 12.

In some examples, proof mass assembly 50 may include one or more strain isolators (not shown) substantially similar to strain isolators 24a and 24b and one or more thermal isolators (not shown) substantially similar to thermal isolator 26 of FIG. 1A.

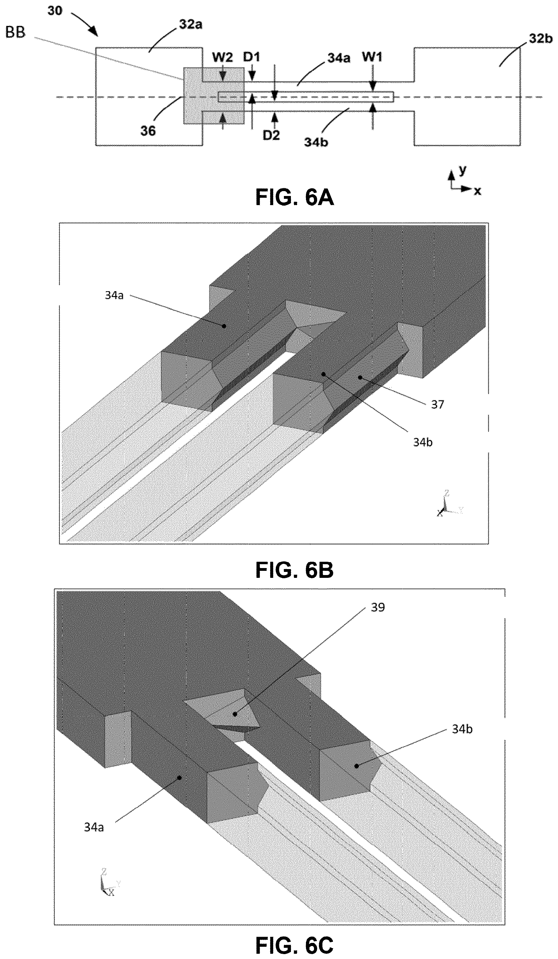

FIG. 6A is an enlarged schematic view of an example quartz resonator 30 that is produced by wet-etching. FIGS. 6B-6C are an enlarged schematic view of cross-section BB of FIG. 6A. FIG. 6B shows an example of a triangular shaped asperity 37 on a side wall of tine 34b that may result from wet-etching quartz resonator 30. Similar types of asperities may also be found on tine 34a. As discussed above, a side wall etch asperity 37 on just one side of tines 34b may cause the lateral bending neutral axis to be offset resulting in asymmetric elastic boundary conditions at the ends of the tines 34a, 34b. This may reduce the ability of the resonator end configuration to eliminate end pumping during operation, which may increase cross coupling between the resonators. This may then drive activity dip bias errors. An asymmetric boundary conditions may also reduce the coupling coefficient between the tines 34a, 34b and may cause the lateral tine displacement to be non-symmetric during operation. This may lead to a loss of quality factor ("Q") for the resonator.

FIG. 6C shows an example of a multi-faceted corner fillet 39 at the ends of tines 34a, 34b that may result from wet-etching quartz resonator 30. As discussed above, multi-faceted corner fillet 39 at the ends of tines 34a, 34b, may create stress risers, which may decrease the survivability of the resonator through high dynamic loading. Multi-faceted corner fillet 39 at the ends of tines may also create differences in effective tine length, which may cause the individual tines to have slightly different uncoupled frequencies. This effect, in conjunction with reduced coupling between the tines 34a, 34b, may cause the coupled common frequency for resonator 30 to have instabilities.

In some examples, resonator 60a and resonator 60b may be selective laser etched within a quartz substrate. In some examples, the quartz substrate may be a crystalline quartz substrate, a monolithic quartz substrate, or a monolithic crystalline quartz substrate. In some examples, one or more flexures 16a, 16b may be selective laser etched within the quartz substrate. In some examples, flexure 16a may connect a proof mass support 14 of the substrate and a proof mass 12 of the substrate. In some examples, proof mass 12 and proof mass support 14 may be selective laser etched within the quartz substrate. In some examples, dampening plates 56 may be selective laser etched within the quartz substrate. In some examples, the selective laser etch may be configured to etch material of the quartz substrate at a depth below a surface of the quartz substrate.

In some examples, selective laser etching a quartz substrate, such as with a precision focused laser, to form one or more quartz resonators 60a, 60b, may help produce straight, and/or substantially straight, vertical side walls of resonators 60a, 60b. In some examples, one or more resonator 60a, 60b having straight, and/or substantially, straight vertical side walls may improve the ability of one or more resonators 60a, 60b or reduce or eliminate end pumping by keeping the end boundary conditions for one or more tines elastically symmetric. In some examples, one or more resonators 60a, 60b having straight, and/or substantially straight, vertical side walls may improve coupling between the resonator tines and may maintain balanced lateral motion of the tines increasing Q for one or more resonators 60a, 60b. In some examples, one or more resonators 60a, 60b having straight, and/or substantially straight, vertical side walls may keep tine frequencies matched and strongly coupled, which may reduce the potential for coupled resonator frequency instability. In some examples, one or more resonators 60a, 60b having straight, and/or substantially straight, vertical side walls may increase strength of the resonator to improve survivability under high dynamic loading.

In some examples, selective laser etching a quartz substrate to form one or more resonators 60a, 60b, one or more flexures 16a, 16b, proof of mass support 14, and/or proof of mass 12 may reduce or prevent aspirations that occur asymmetrically at the ends or root of the tines and appear as multi-faceted corner fillets at the ends of tines, which may increase the survivability of one or more resonators 60a, 60b and may cause the coupled common frequency for one more resonators 60a, 60b to have increased stability.

In some examples, selective laser etching a quartz substrate to form one or more resonators 60a, 60b, one or more flexures 16a, 16b, proof of mass support 14, and/or proof of mass 12 may include modifying, by a laser, such as a precision laser, one or more characteristics of portions of at least one or more of resonators 60a, 60b, one or more flexures 16a, 16b, proof of mass support 14, and/or proof of mass 12, and then removing, by wet-etching, the modified portions of the at least one or more of resonators 60a, 60b, one or more flexures 16a, 16b, proof of mass support 14, and/or proof of mass 12. In some examples, this may reduce or prevent aspirations that occur asymmetrically at the ends or root of the tines and appear as multi-faceted corner fillets at the ends of tines, which may increase the survivability of one or more resonators 60a, 60b and may cause the coupled common frequency for one more resonators 60a, 60b to have increased stability.

In some examples, one or more characteristics of portions of at least one or more of resonators 60a, 60b, one or more flexures 16a, 16b, proof of mass support 14, and/or proof of mass 12 may be modified by applying, by the laser, one or more picosecond and/or femtosecond laser pulses configured to irradiate the portion of the material. In some examples, the focus volume applied by the laser to modify the portions of resonators 60a, 60b, one or more flexures 16a, 16b, proof of mass support 14, and/or proof of mass 12 may be a few cubic micrometers, such as less than 10 cubic micrometers. In some examples, the short duration of pulses and/or the small focal volume in the selective laser etching process may reduce or prevent cracks in the material being treated by the laser.

In some examples, proof mass assembly 50 may be a monolithic proof mass assembly. For example, proof mass assembly 50 may be formed within and/or from a monolithic substrate, such as a crystalline quartz substrate. In some examples, at least a portion of, or all of, proof mass assembly 50 may be formed via a selective laser etch. For example, a selective laser etch may irradiate a substantially small volume and precisely locate such volume anywhere within a monolithic substrate, such as a monolithic quartz substrate. The selective laser etch may be focused at varying depths, e.g., along the z-direction in the example shown in FIG. 3. For example, resonators 60a and 60b may be formed via selective laser etch, including pads 72a, 72b, 76a, 76b, and tines 74a, 74b, 78a, 78b, including gap and/or spacing W1.

In some examples, proof mass assembly 50 may be monolithically formed via selective laser etching, e.g., 3D etching, to form proof mass 12, proof mass support 14, flexures 16a, 16b, resonators 60a, 60b, including depth etching between tines 74a, 74b and surfaces 40, 42 and tines 78a, 78b and surfaces 44, 46, and dampening plates 56, strain isolators 24a, 24b, thermal isolators 26, and/or any other components of proof mass 50. In other words, the components of proof mass assembly may be integral to each other, e.g., integrally connected. In some examples, the components of proof mass assembly, e.g., proof mass 12, proof mass support 14, flexures 16a, 16b, resonators 60a, 60b, dampening plates 56, strain isolators 24a, 24b, thermal isolators 26, and the like, may have substantially the same CTE, e.g., by virtue of being the same material and formed within and/or from the same substrate.

In other examples, proof mass assembly 50 may be formed via attachment of one or more components made of the same material having substantially the same CTE and without bonding adhesives such as an epoxy. For example, resonators 60a and 60b may be connected to proof mass 12 and proof mass support 14 via a laser weld. In some examples, the laser weld may be configured to fuse at least a portion of resonators 60a and 60b to proof mass 12 and proof mass support 14.

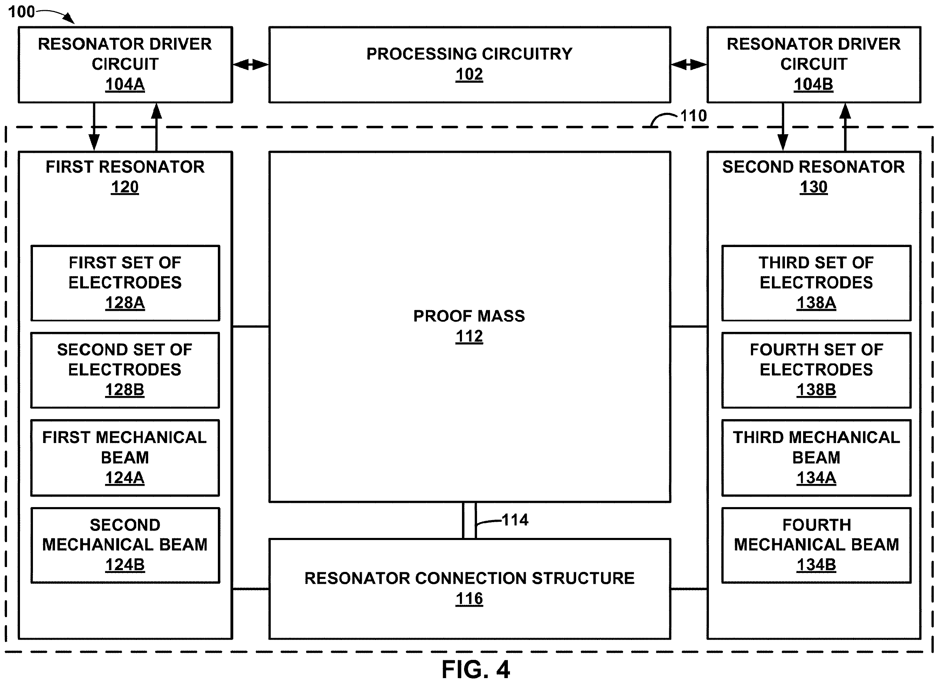

FIG. 4 is a block diagram illustrating an accelerometer system 100, in accordance with one or more techniques of this disclosure. As illustrated in FIG. 4, accelerometer system 100 includes processing circuitry 102, resonator driver circuits 104A-104B (collectively, "resonator driver circuits 104"), and proof mass assembly 110. Proof mass assembly 110 may be substantially similar to proof mass assembly 10 and/or 50 described above. Proof mass assembly 110 includes proof mass 112, resonator connection structure 116, first resonator 120, and second resonator 130. Proof mass 112 may be substantially similar to proof mass 12, resonator connection structure 116 may be substantially similar to proof mass support 14, and resonators 120, 130 may be substantially similar to resonators 20a, 20b and/or resonators 60a, 60b, described above.

First resonator 120 includes first mechanical beam 124A and second mechanical beam 124B (collectively, "mechanical beams 124"), and first set of electrodes 128A and second set of electrodes 128B (collectively, "electrodes 128"). Second resonator 130 includes third mechanical beam 134A and fourth mechanical beam 134B (collectively, "mechanical beams 134"), and third set of electrodes 138A and fourth set of electrodes 138B (collectively, "electrodes 138").

Accelerometer system 100 may, in some examples, be configured to determine an acceleration associated with an object (not illustrated in FIG. 4) based on a measured vibration frequency of one or both of first resonator 120 and second resonator 130 which are connected to proof mass 112. In some examples, the vibration of first resonator 120 and second resonator 130 is induced by drive signals emitted by resonator driver circuit 104A and resonator driver circuit 104B, respectively. In turn, first resonator 120 may output a first set of sense signals and second resonator 130 may output a second set of sense signals and processing circuitry 102 may determine an acceleration of the object based on the first set of sense signals and the second set of sense signals.

Processing circuitry 102, in some examples, may include one or more processors that are configured to implement functionality and/or process instructions for execution within accelerometer system 100. For example, processing circuitry 102 may be capable of processing instructions stored in a storage device. Processing circuitry 102 may include, for example, microprocessors, digital signal processors (DSPs), application specific integrated circuits (ASICs), field-programmable gate arrays (FPGAs), or equivalent discrete or integrated logic circuitry, or a combination of any of the foregoing devices or circuitry. Accordingly, processing circuitry 102 may include any suitable structure, whether in hardware, software, firmware, or any combination thereof, to perform the functions ascribed herein to processing circuitry 102.

A memory (not illustrated in FIG. 4) may be configured to store information within accelerometer system 100 during operation. The memory may include a computer-readable storage medium or computer-readable storage device. In some examples, the memory includes one or more of a short-term memory or a long-term memory. The memory may include, for example, random access memories (RAM), dynamic random access memories (DRAM), static random access memories (SRAM), magnetic discs, optical discs, flash memories, or forms of electrically programmable memories (EPROM) or electrically erasable and programmable memories (EEPROM). In some examples, the memory is used to store program instructions for execution by processing circuitry 102.

In some examples, resonator driver circuit 104A may be electrically coupled to first resonator 120. Resonator driver circuit 104A may output a first set of drive signals to first resonator 120, causing first resonator 120 to vibrate at a resonant frequency. Additionally, in some examples, resonator driver circuit 104A may receive a first set of sense signals from first resonator 120, where the first set of sense signals may be indicative of a mechanical vibration frequency of first resonator 120. Resonator driver circuit 104A may output the first set of sense signals to processing circuitry 102 for analysis. In some examples, the first set of sense signals may represent a stream of data such that processing circuitry 102 may determine the mechanical vibration frequency of first resonator 120 in real-time or near real-time.

In some examples, resonator driver circuit 104B may be electrically coupled to second resonator 130. Resonator driver circuit 104B may output a second set of drive signals to second resonator 130, causing second resonator 130 to vibrate at a resonant frequency. Additionally, in some examples, resonator driver circuit 104B may receive a second set of sense signals from second resonator 130, where the second set of sense signals may be indicative of a mechanical vibration frequency of first resonator 130. Resonator driver circuit 104B may output the second set of sense signals to processing circuitry 102 for analysis. In some examples, the second set of sense signals may represent a stream of data such that processing circuitry 102 may determine the mechanical vibration frequency of second resonator 130 in real-time or near real-time.

Proof mass assembly 110 may secure proof mass 112 to resonator connection structure 116 using first resonator 120 and second resonator 130. For example, proof mass 112 may be secured to resonator connection structure 116 in a first direction with hinge flexure 114. Hinge flexure 114 may be substantially similar to flexures 16a, 16b described above. Proof mass 112 may be secured to resonator connection structure 116 in a second direction with first resonator 120 and second resonator 130. Proof mass 112 may be configured to pivot about hinge flexure 114, applying force to first resonator 120 and second resonator 130 in the second direction. For example, if proof mass 112 pivots towards first resonator 120, proof mass 112 applies a compression force to first resonator 120 and applies a tension force to second resonator 130. If proof mass 112 pivots towards second resonator 130, proof mass 112 applies a tension force to first resonator 120 and applies a compression force to second resonator 130.

An acceleration of proof mass assembly 110 may affect a degree to which proof mass 112 pivots about hinge flexure 114. As such, the acceleration of proof mass assembly 110 may determine an amount of force applied to first resonator 120 and an amount of force applied to second resonator 130. An amount of force (e.g., compression force or tension force) applied to resonators 120, 130 may be correlated with an acceleration vector of proof amass assembly 110, where the acceleration vector is normal to hinge flexure 114.

In some examples, the amount of force applied to first resonator 120 may be correlated with a resonant frequency in which first resonator 120 vibrates in response to resonator driver circuit 104A outputting the first set of drive signals to first resonator 120. For example, first resonator 120 may include mechanical beams 124. In this way, first resonator 120 may represent a DETF structure, where each mechanical beam of mechanical beams 124 vibrate at the resonant frequency in response to receiving the first set of drive signals. Electrodes 128 may generate and/or receive electrical signals indicative of a mechanical vibration frequency of first mechanical beam 124A and a mechanical vibration frequency of second mechanical beam 124B. For example, the first set of electrodes 128A may generate and/or receive a first electrical signal and the second set of electrodes 128B may generate and/or receive a second electrical signal. In some examples, the first electrical signal may be in response to sensing a mechanical vibration frequency of the mechanical beams 124 (e.g., both mechanical beams 124A and 124B) via the first set of electrodes 128A, e.g., a resonant frequency of mechanical beams 124. Resonant driver circuit 104A may receive the first electrical signal and may amplify the first electrical signal to generate the second electrical signal. The second electrical signal may be applied to mechanical beams 124 (e.g., both mechanical beams 124A and 124B) via second set of electrodes 128B, e.g., to drive mechanical beams 124 to vibrate at the resonant frequency. Electrodes 128 may output the first electrical signal and the second electrical signal to processing circuitry 102.

In some examples, the mechanical vibration frequency of the first mechanical beam 124A and the second mechanical beam 124B are substantially the same when resonator driver circuit 104A outputs the first set of drive signals to first resonator 120. For example, the mechanical vibration frequency of first mechanical beam 124A and the mechanical vibration frequency of second mechanical beam 124B may both represent the resonant frequency of first resonator 120, where the resonant frequency is correlated with an amount of force applied to first resonator 120 by proof mass 112. The amount of force that proof mass 112 applies to first resonator 120 may be correlated with an acceleration of proof mass assembly 110 relative to a long axis of resonator connection structure 116. As such, processing circuitry 102 may calculate the acceleration of proof mass 112 relative to the long axis of resonator connection structure 116 based on the detected mechanical vibration frequency of mechanical beams 124.

In some examples, the amount of force applied to second resonator 130 may be correlated with a resonant frequency in which second resonator 130 vibrates in response to resonator driver circuit 104B outputting the second set of drive signals to second resonator 130. For example, second resonator 130 may include mechanical beams 134. In this way, second resonator 130 may represent a DETF structure, where each mechanical beam of mechanical beams 134 vibrate at the resonant frequency in response to receiving the second set of drive signals. Electrodes 138 may generate and/or receive electrical signals indicative of a mechanical vibration frequency of third mechanical beam 134A and a mechanical vibration frequency of fourth mechanical beam 134B. For example, the third set of electrodes 138A may generate and/or receive a third electrical signal and the fourth set of electrodes 138B may generate a fourth electrical signal. In some examples, the third electrical signal may be in response to sensing a mechanical vibration frequency of the mechanical beams 134 (e.g., both mechanical beams 134A and 134B) via the third set of electrodes 138A, e.g., a resonant frequency of mechanical beams 134. Resonant driver circuit 104B may receive the third electrical signal and may amplify the third electrical signal to generate the fourth electrical signal. The fourth electrical signal may be applied to mechanical beams 134 (e.g., both mechanical beams 134A and 134B) via fourth set of electrodes 138B, e.g., to drive mechanical beams 134 to vibrate at the resonant frequency. Electrodes 138 may output the third electrical signal and the fourth electrical signal to processing circuitry 102.

In some examples, the mechanical vibration frequency of the third mechanical beam 134A and the fourth mechanical beam 134B are substantially the same when resonator driver circuit 104B outputs the second set of drive signals to second resonator 130. For example, the mechanical vibration frequency of third mechanical beam 134A and the mechanical vibration frequency of fourth mechanical beam 134B may both represent the resonant frequency of second resonator 130, where the resonant frequency is correlated with an amount of force applied to second resonator 130 by proof mass 112. The amount of force that proof mass 112 applies to second resonator 130 may be correlated with an acceleration of proof mass assembly 110 relative to a long axis of resonator connection structure 116. As such, processing circuitry 102 may calculate the acceleration of proof mass 112 relative to the long axis of resonator connection structure 116 based on the detected mechanical vibration frequency of mechanical beams 134.

In some cases, processing circuitry 102 may calculate an acceleration of proof mass assembly 110 relative to the long axis of resonator connection structure 116 based on a difference between the detected mechanical vibration frequency of mechanical beams 124 and the detected mechanical vibration frequency of mechanical beams 134. When proof mass assembly 110 accelerates in a first direction along the long axis of resonator connection structure 116, proof mass 112 pivots towards first resonator 120, causing proof mass 112 to apply a compression force to first resonator 120 and apply a tension force to second resonator 130. When proof mass assembly 110 accelerates in a second direction along the long axis of resonator connection structure 116, proof mass 112 pivots towards second resonator 130, causing proof mass 112 to apply a tension force to first resonator 120 and apply a compression force to second resonator 130. A resonant frequency of a resonator which is applied a first compression force may be greater than a resonant frequency of the resonator which is applied a second compression force, when the first compression force is less than the second compression force. A resonant frequency of a resonator which is applied a first tension force may be greater than a resonant frequency of the resonator which is applied a second tension force, when the first tension force is greater than the second tension force.

Although accelerometer system 100 is illustrated as including resonator connection structure 116, in some examples not illustrated in FIG. 4, proof mass 112, first resonator 120, and second resonator 130 are not connected to a resonator connection structure. In some such examples, proof mass 112, first resonator 120, and second resonator 130 are connected to a substrate. For example, hinge flexure 114 may fix proof mass 112 to the substrate such that proof mass 112 may pivot about hinge flexure 114, exerting tension forces and/or compression forces on first resonator 120 and second resonator 130.

Although accelerometer system 100 is described as having two resonators, in other examples not illustrated in FIG. 1, an accelerometer system may include less than two resonators or greater than two resonators. For example, an accelerometer system may include one resonator. Another accelerometer system may include four resonators.

In one or more examples, the accelerometers described herein may utilize hardware, software, firmware, or any combination thereof for achieving the functions described. Those functions implemented in software may be stored on or transmitted over, as one or more instructions or code, a computer-readable medium and executed by a hardware-based processing unit. Computer-readable media may include computer-readable storage media, which corresponds to a tangible medium such as data storage media, or communication media including any medium that facilitates transfer of a computer program from one place to another, e.g., according to a communication protocol. In this manner, computer-readable media generally may correspond to (1) tangible computer-readable storage media which is non-transitory or (2) a communication medium such as a signal or carrier wave. Data storage media may be any available media that can be accessed by one or more computers or one or more processors to retrieve instructions, code and/or data structures for implementation of the techniques described in this disclosure.

Instructions may be executed by one or more processors within the accelerometer or communicatively coupled to the accelerometer. The one or more processors may, for example, include one or more DSPs, general purpose microprocessors, application specific integrated circuits ASICs, FPGAs, or other equivalent integrated or discrete logic circuitry. Accordingly, the term "processor," as used herein may refer to any of the foregoing structure or any other structure suitable for implementation of the techniques described herein. In addition, in some aspects, the functionality described herein may be provided within dedicated hardware and/or software modules configured for performing the techniques described herein. Also, the techniques could be fully implemented in one or more circuits or logic elements.

The techniques of this disclosure may be implemented in a wide variety of devices or apparatuses that include integrated circuits (ICs) or sets of ICs (e.g., chip sets). Various components, modules, or units are described in this disclosure to emphasize functional aspects of devices configured to perform the disclosed techniques, but do not necessarily require realization by different hardware units. Rather, various units may be combined or provided by a collection of interoperative hardware units, including one or more processors as described above, in conjunction with suitable software and/or firmware.

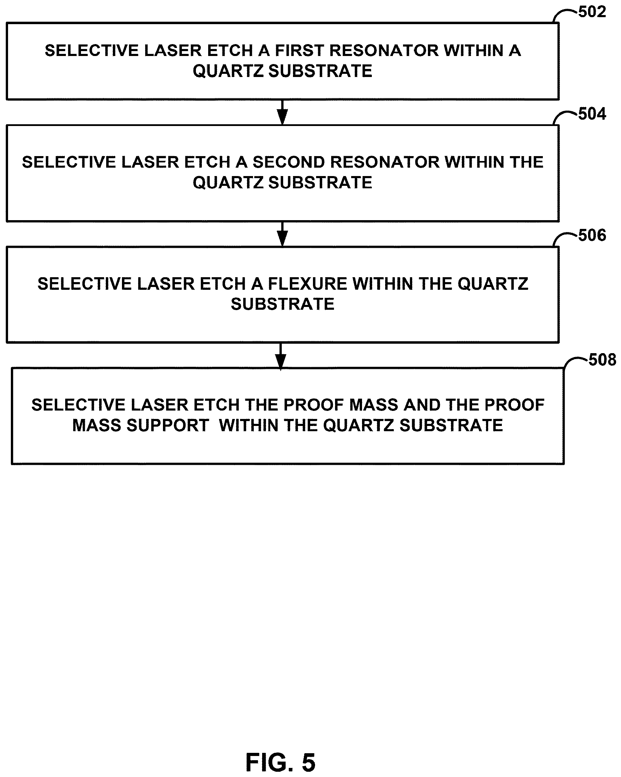

FIG. 5 is a flow diagram illustrating an example technique of making a proof mass assembly. FIG. 5 is described with respect to proof mass assembly 10 of FIGS. 1A and 1B and proof mass assembly 50 of FIG. 3. However, the techniques of FIG. 5 may utilized to make different proof mass assemblies and/or additional or alternative accelerometer systems.

In some examples, a manufacturer may laser etch resonator 60a within a quartz substrate including beams and/or tines 74a, 74b connected to top surface 40 of proof mass 12 and top surface 42 of proof mass support 14 (502). For example, the manufacturer may selective laser etch pad 72b connected to and/or integral with proof mass 12 at top surface 40 and pad 72a connected to and/or integral with proof mass support 14 at top surface 42, and selective laser etch tines 74a, 74b connected to and/or integral with pads 74a and 74b.

In some examples, the manufacturer may selective laser etch resonator 60b within the quartz substrate including beams and/or tines 78a, 78b connected to bottom surface 44 of proof mass 12 and bottom surface 46 of proof mass support 14 (504). For example, the manufacturer may selective laser etch pad 76b connected to and/or integral with proof mass 12 at bottom surface 44 and pad 76a connected to and/or integral with proof mass support 14 at bottom surface 46, and selective laser etch tines 78a, 78b connected to and/or integral with pads 76a and 76b.

In some examples, the manufacturer may selective laser etch flexure 16a and/or 16b within the quartz substrate between proof mass 12 and proof mass support 14 (506). For example, the manufacturer may selective laser etch proof mass 12, proof mass support 14, and flexure 16a and/or 16b connecting proof mass 12 and proof mass support 14 from the quartz substrate, e.g., without using bonding agents, other materials, or an adhesive such as an epoxy material. In some examples, proof mass 12, proof mass support 14, and flexure 16a and/or 16b have substantially the same CTE.

In some examples, the manufacturer may selective laser etch proof mass 12 and proof mass support 14 within the quartz substrate (508). In some examples, the quartz substrate may be a crystalline quartz substrate, a monolithic quartz substrate, or a monolithic crystalline quartz substrate.

In some examples, the manufacturer may selective laser etch material of the quartz substrate at one or more depths below a surface of the quartz substrate. For example, a crystalline quartz substrate may have a depth, e.g., a length in the depth direction (z-direction of FIG. 3), that is at least D2, and the manufacturer may selective laser etch material of the crystalline quartz substrate "beneath" top surface 80 and/or "above" bottom surface 82, e.g., a distance within the bulk of the crystalline quartz substrate from top surface 80 and/or bottom surface 82. For example, the manufacturer may selective laser etch material between top surface 40 of proof mass 12 and surface 84 of dampening plate 56a, e.g., by irradiating material of the crystalline quartz substrate corresponding to the gap between surfaces 40 and 84 through material of the crystalline quartz substrate, for example, through dampening plate 56a and without etching the material of dampening plate 56a. Similarly, the manufacturer may selective laser etch material between bottom surface 44 of proof mass 12 and surface 86 of dampening plate 56b, e.g., by irradiating material of the crystalline quartz substrate corresponding to the gap between surfaces 44 and 86 through material of the crystalline quartz substrate, for example, through dampening plate 56b and without etching the material of dampening plate 56b. As another example, the manufacturer may selective laser etch beam and/or tine 74b by selective laser etching material between top surface 90 tine 74b and top surface 40 of proof mass 12 and top surface 42 of proof mass support 14, e.g., by irradiating material of the crystalline quartz substrate corresponding to the gap between surface 90 and surfaces 40, 42 through material of the crystalline quartz substrate, for example, through tine 74b and at a depth "below" and/or within the crystalline quartz substrate from surface 90 without etching the material of tine 74b. In other words, the manufacturer may form 3D structures, e.g., proof mass 12, proof mass support 14, flexures 16a, 16b, resonators 20a, 20b, 60a, 60b, strain isolators 24a, 24b, one or more thermal isolators 26, or any other suitable proof mass assembly component, monolithically from a single part, substrate, blank, etc., of material, such as a single crystalline quartz substrate. The proof mass assembly and each of its components may then have substantially the same CTE. In some examples, the manufacturer may form such 3D structures using a selective laser etch.

In some examples, the manufacturer may form the components of a proof mass assembly, e.g., proof mass 12, proof mass support 14, flexures 16a, 16b, resonators 20a, 20b, 60a, 60b, strain isolators 24a, 24b, one or more thermal isolators 26, or any other suitable proof mass assembly component, of proof mass assembly 10 and/or 50, from the same material and having substantially the same CTE, and then connect and/or attach one or more of the components together without using bonding agents, other materials, or an adhesive such as an epoxy material. For example, the manufacturer may laser weld one or more of the proof mass assembly components via a selective laser weld, e.g., via welding portions of material within the depth of the proof mass assembly and/or welding surfaces of components through the material of the components. For example, the manufacturer may selective laser weld a surface of pad 72b to top surface 40 of proof mass 12 through the material of pad 72b, e.g., the manufacturer may focus femtosecond laser radiation at depth corresponding to the "bottom" surface of pad 72b and top surface 40 through pad 72b. By doing so, the manufacturer may alter the material of pad 72b and proof mass 12 in the volume of the focused radiation, e.g., the weld spot volume, so as to fuse the material of the different components, and may not alter material of pad 72b and proof mass 12 that is not within the volume of the focused radiation and/or weld spot volume. For example, the material of pad 72b and/or proof mass 12 may be substantially transparent to the laser radiation of the selective laser weld, and the focal volume and/or weld spot volume may have a sufficient energy density to alter the material of one or both of pad 72b and/or proof mass 12. Other components of the proof mass assembly may be similarly connected and/or attached.

The techniques described in this disclosure may be implemented, at least in part, in hardware, software, firmware, or any combination thereof. For example, various aspects of the described techniques may be implemented within one or more processors, including one or more microprocessors, DSPs, ASICs, FPGAs, or any other equivalent integrated or discrete logic circuitry, as well as any combinations of such components. The term "processor" or "processing circuitry" may generally refer to any of the foregoing logic circuitry, alone or in combination with other logic circuitry, or any other equivalent circuitry. A control unit including hardware may also perform one or more of the techniques of this disclosure.

Such hardware, software, and firmware may be implemented within the same device or within separate devices to support the various techniques described in this disclosure. In addition, any of the described units, modules or components may be implemented together or separately as discrete but interoperable logic devices. Depiction of different features as modules or units is intended to highlight different functional aspects and does not necessarily imply that such modules or units must be realized by separate hardware, firmware, or software components. Rather, functionality associated with one or more modules or units may be performed by separate hardware, firmware, or software components, or integrated within common or separate hardware, firmware, or software components.

The techniques described in this disclosure may also be embodied or encoded in an article of manufacture including a computer-readable storage medium encoded with instructions. Instructions embedded or encoded in an article of manufacture including a computer-readable storage medium, may cause one or more programmable processors, or other processors, to implement one or more of the techniques described herein, such as when instructions included or encoded in the computer-readable storage medium are executed by the one or more processors. Computer readable storage media may include random access memory (RAM), read only memory (ROM), programmable read only memory (PROM), erasable programmable read only memory (EPROM), electronically erasable programmable read only memory (EEPROM), flash memory, a hard disk, a compact disc ROM (CD-ROM), a floppy disk, a cassette, magnetic media, optical media, or other computer readable media. In some examples, an article of manufacture may include one or more computer-readable storage media.

In some examples, a computer-readable storage medium may include a non-transitory medium. The term "non-transitory" may indicate that the storage medium is not embodied in a carrier wave or a propagated signal. In certain examples, a non-transitory storage medium may store data that can, over time, change (e.g., in RAM or cache).

Various examples have been described. These and other examples are within the scope of the following claims.

## Claims

1. A proof mass assembly (10, 50, 110) comprising a quartz substrate (508), the quartz substrate comprising:
a proof mass (12, 112);
a proof mass support (14);
a flexure (16, 16a, 16b) connecting the proof mass to the proof mass support, wherein the proof mass is configured to rotate relative to the proof mass support via the flexure;
a first resonator (120) connected to a first major surface of the proof mass and a first major surface of the proof mass support;
a second resonator (130) connected to a second major surface of the proof mass and a second major surface of the proof mass support; and
a strain isolator (24a, 24b) connected to the proof mass support and configured to reduce a strain, compression or tension force of at least one of the proof mass, the proof mass support, the flexure, the first resonator, or the second resonator upon application of a force to the proof mass assembly.

2. The proof mass assembly (10, 50, 110) of claim 1, wherein the at least one of the proof mass (12, 112), the proof mass support (14), the flexure (16, 16a, 16b), the first resonator (120), or the second resonator (130) is formed by selective laser etching includes:
one or more characteristics of portions of the at least one of the proof mass (12, 112), the proof mass support (14), the flexure (16, 16a, 16b), the first resonator (120), or the second resonator (130) being modified by a laser; and
the modified portions of the at least one of the proof mass (12, 112), the proof mass support (14), the flexure (16, 16a, 16b), the first resonator (120), or the second resonator (130) being removed by wet-etching.

3. The proof mass assembly (10, 50, 110) of claim 1, wherein the quartz substrate (508) is a crystalline quartz substrate (508) or a monolithic substrate.

4. The proof mass assembly (10, 50, 110) of claim 1, wherein the first major surface of the proof mass (12, 112) is opposite the second major surface of the proof mass (12, 112), wherein the first major surface of the proof mass support (14) is opposite the second major surface of the proof mass support (14).

5. The proof mass assembly (10, 50, 110) of claim 1, wherein the first resonator (120) and the second resonator (130) are not coplanar.

6. The proof mass assembly (10, 50, 110) of claim 1, wherein the first resonator (120) is configured to have a compressive force and the second resonator (130) is configured to have a tensile force upon rotation of the proof mass (12, 112) in a first direction.

7. The proof mass assembly (10, 50, 110) of claim 1, wherein the quartz substrate (508) further comprises a dampening plate connected to the proof mass support (14) and configured to limit a range of rotation of the proof mass (12, 112), wherein the dampening plate is formed by selective laser etching.

8. A method, comprising:
selective laser etching a first resonator (120) within a quartz substrate (508);
selective laser etching a second resonator (130) within the quartz substrate (508);
selective laser etching a strain isolator (24a, 24b) within the quartz substrate (508); and
selective laser etching a flexure (16, 16a, 16b) within the quartz substrate (508), wherein the flexure (16, 16a, 16b) connects a first portion of the substrate to a second portion of the substrate, wherein the first portion of the substrate is a proof mass support (14), wherein the second portion of the substrate is a proof mass (12, 112), and wherein the strain isolator is connected to the proof mass support (14) and is configured to reduce a strain, compression or tension force of at least one of the proof mass (12, 112), the proof mass support (14), the flexure (16, 16a, 16b), the first resonator (120), or the second resonator (130) upon application of a force to the proof mass assembly (10, 50, 110).

9. The method of claim 8, wherein the selective laser etching the first resonator (120) within the quartz substrate (508) includes:
modifying, by a laser, one or more characteristics of portions of the first resonator (120); and
removing, by wet-etching, the modified portions of the first resonator (120).

10. The method of claim 9, wherein the selective laser etching the second resonator (130) within the quartz substrate (508) includes:
modifying, by the laser, one or more characteristics of portions of the second resonator (130); and
removing, by wet-etching, the modified portions of the second resonator (130).

11. The method of claim 8, wherein the quartz substrate (508) is a crystalline quartz substrate (508) or a monolithic substrate.

12. The method of claim 8, further comprising:
selective laser etching the proof mass (12, 112) and the proof mass support (14) within the quartz substrate (508).

13. A vibrating beam accelerometer comprising:
at least one dampening plate; and
the proof mass assembly (10, 50, 110) of claim 1,
wherein the at least one dampening plate, the at least one strain isolator, and the proof mass assembly (10, 50, 110) comprise crystalline quartz.

## Patentansprüche

1. Prüfmassenanordnung (10, 50, 110), die ein Quarzsubstrat (508) umfasst, das Quarzsubstrat umfassend:
eine Prüfmasse (12, 112);
einen Prüfmassenträger (14);
ein Biegeelement (16, 16a, 16b), das die Prüfmasse mit dem Prüfmassenträger verbindet, wobei die Prüfmasse dazu konfiguriert ist, sich über das Biegeelement relativ zu dem Prüfmassenträger zu drehen;
einen ersten Resonator (120), der mit einer ersten Hauptfläche der Prüfmasse und einer ersten Hauptfläche des Prüfmassenträgers verbunden ist;
einen zweiten Resonator (130), der mit einer zweiten Hauptfläche der Prüfmasse und einer zweiten Hauptfläche des Prüfmassenträgers verbunden ist; und
einen Belastungsisolator (24a, 24b), der mit dem Prüfmassenträger verbunden und dazu konfiguriert ist, bei Anwenden einer Kraft auf die Prüfmassenanordnung eine Belastungs-, Druck- oder Spannkraft von mindestens einem aus der Prüfmasse, dem Prüfmassenträger, dem Biegungselement, dem ersten Resonator oder dem zweiten Resonator zu reduzieren.

2. Prüfmassenanordnung (10, 50, 110) nach Anspruch 1, wobei das mindestens eine aus der Prüfmasse (12, 112), dem Prüfmassenträger (14), dem Biegeelement (16, 16a, 16b), dem ersten Resonator (120) oder dem zweiten Resonator (130) durch selektives Laserätzen geformt ist, das Folgendes beinhaltet:
Verändern von einem oder mehreren Merkmalen des mindestens einem aus der Prüfmasse (12, 112), dem Prüfmassenträger (14), dem Biegeelement (16, 16a, 16b), dem ersten Resonator (120) oder dem zweiten Resonator (130) mittels eines Lasers; und
Entfernen der veränderten Teile des mindestens einem aus der Prüfmasse (12, 112), dem Prüfmassenträger (14), dem Biegeelement (16, 16a, 16b), dem ersten Resonator (120) oder dem zweiten Resonator (130) mittels Nassätzen.

3. Prüfmassenanordnung (10, 50, 110) nach Anspruch 1, wobei das Quarzsubstrat (508) ein kristallines Quarzsubstrat (508) oder ein monolithisches Substrat ist.

4. Prüfmassenanordnung (10, 50, 110) nach Anspruch 1, wobei die erste Hauptfläche der Prüfmasse (12, 112) gegenüber der zweiten Hauptfläche der Prüfmasse (12, 112) ist, wobei die erste Hauptfläche des Prüfmassenträgers (14) gegenüber der zweiten Hauptfläche des Prüfmassenträgers (14) ist.

5. Prüfmassenanordnung (10, 50, 110) nach Anspruch 1, wobei der erste Resonator (120) und der zweite Resonator (130) nicht koplanar sind.

6. Prüfmassenanordnung (10, 50, 110) nach Anspruch 1, wobei bei einer Drehung der Prüfmasse (12, 112) in eine erste Richtung der erste Resonator (120) dazu konfiguriert ist, eine Druckkraft aufzuweisen, und der zweite Resonator (130) dazu konfiguriert ist, eine Zugkraft aufzuweisen.

7. Prüfmassenanordnung (10, 50, 110) nach Anspruch 1, wobei das Quarzsubstrat (508) ferner eine Dämpfungsplatte umfasst, die mit dem Prüfmassenträger (14) verbunden und dazu konfiguriert ist, einen Drehungsbereich der Prüfmasse (12, 112) zu begrenzen, wobei die Dämpfungsplatte mittels selektivem Laserätzen geformt ist.

8. Verfahren, umfassend:
selektives Laserätzen eines ersten Resonators (120) innerhalb eines Quarzsubstrats (508);
selektives Laserätzen eines zweiten Resonators (130) innerhalb des Quarzsubstrats (508);
selektives Laserätzen eines Belastungsisolators (24a, 24b) innerhalb des Quarzsubstrats (508); und
selektives Laserätzen eines Biegeelements (16, 16a, 16b) innerhalb des Quarzsubstrats (508), wobei das Biegeelement (16, 16a, 16b) einen ersten Teil des Substrats mit einem zweiten Teil des Substrats verbindet, wobei der erste Teil des Substrats ein Prüfmassenträger (14) ist, wobei der zweite Teil des Substrats eine Prüfmasse (12, 112) ist und wobei der Belastungsisolator mit dem Prüfmassenträger (14) verbunden und dazu konfiguriert ist, bei Anwenden einer Kraft auf die Prüfmassenanordnung (10, 50, 110) eine Belastungs-, Druck- oder Spannkraft von mindestens einem aus der Prüfmasse (12, 112), dem Prüfmassenträger (14), dem Biegeelement (16, 16a, 16b), dem ersten Resonator (120) oder dem zweiten Resonator (130) zu reduzieren.

9. Verfahren nach Anspruch 8, wobei das selektive Laserätzen des ersten Resonators (120) innerhalb des Quarzsubstrats (508) Folgendes beinhaltet:
Verändern eines oder mehrerer Merkmale von Teilen des ersten Resonators (120) mittels eines Lasers; und
Entfernen der veränderten Teile des ersten Resonators (120) mittels Nassätzen.

10. Verfahren nach Anspruch 9, wobei das selektive Laserätzen des zweiten Resonators (130) innerhalb des Quarzsubstrats (508) Folgendes beinhaltet:
Verändern eines oder mehrerer Merkmale von Teilen des zweiten Resonators (130) mittels des Lasers; und
Entfernen der veränderten Teile des zweiten Resonators (130) mittels Nassätzen.

11. Verfahren nach Anspruch 8, wobei das Quarzsubstrat (508) ein kristallines Quarzsubstrat (508) oder ein monolithisches Substrat ist.

12. Verfahren nach Anspruch 8, ferner umfassend:
selektives Laserätzen der Prüfmasse (12, 112) und des Prüfmassenträgers (14) innerhalb des Quarzsubstrats (508).

13. Schwingbalken-Beschleunigungsmesser, umfassend:
mindestens eine Dämpfungsplatte; und
die Prüfmassenanordnung (10, 50, 110) nach Anspruch 1,
wobei die mindestens eine Dämpfungsplatte, der mindestens eine Belastungsisolator und die Prüfmassenanordnung (10, 50, 110) kristallinen Quarz umfassen.

## Revendications

1. Ensemble masse d'épreuve (10, 50, 110) comprenant un substrat de quartz (508), le substrat de quartz comprenant :
une masse d'épreuve (12, 112) ;
un support de masse d'épreuve (14) ;
un élément de flexion (16, 16a, 16b) reliant la masse d'épreuve au support de masse d'épreuve, dans lequel la masse d'épreuve est configurée pour tourner par rapport au support de masse d'épreuve via l'élément de flexion ;
un premier résonateur (120) relié à une première surface principale de la masse d'épreuve et à une première surface principale du support de masse d'épreuve ;
un second résonateur (130) relié à une seconde surface principale de la masse d'épreuve et à une seconde surface principale du support de masse d'épreuve ; et
un isolateur de contrainte (24a, 24b) relié au support de masse d'épreuve et configuré pour réduire une force de contrainte, de compression ou de tension d'au moins un de la masse d'épreuve, du support de masse d'épreuve, de l'élément de flexion, du premier résonateur ou du second résonateur lors de l'application d'une force sur l'ensemble masse d'épreuve.

2. Ensemble masse d'épreuve (10, 50, 110) selon la revendication 1, dans lequel l'au moins un de la masse d'épreuve (12, 112), du support de masse d'épreuve (14), de l'élément de flexion (16, 16a, 16b), du premier résonateur (120) ou du second résonateur (130) est formé par gravure sélective au laser et inclut :
une ou plusieurs caractéristiques de parties de l'au moins un de la masse d'épreuve (12, 112), du support de masse d'épreuve (14), de l'élément de flexion (16, 16a, 16b), du premier résonateur (120) ou du second résonateur (130) étant modifiées par un laser ; et
les parties modifiées de l'au moins un de la masse d'épreuve (12, 112), du support de masse d'épreuve (14), de l'élément de flexion (16, 16a, 16b), du premier résonateur (120) ou du second résonateur (130) étant éliminées par gravure humide.

3. Ensemble masse d'épreuve (10, 50, 110) selon la revendication 1, dans lequel le substrat de quartz (508) est un substrat de quartz cristallin (508) ou un substrat monolithique.

4. Ensemble masse d'épreuve (10, 50, 110) selon la revendication 1, dans lequel la première surface principale de la masse d'épreuve (12, 112) est opposée à la seconde surface principale de la masse d'épreuve (12, 112), dans lequel la première surface principale du support de masse d'épreuve (14) est opposée à la seconde surface principale du support de masse d'épreuve (14).

5. Ensemble masse d'épreuve (10, 50, 110) selon la revendication 1, dans lequel le premier résonateur (120) et le second résonateur (130) ne sont pas coplanaires.

6. Ensemble masse d'épreuve (10, 50, 110) selon la revendication 1, dans lequel le premier résonateur (120) est configuré pour présenter une force de compression et le second résonateur (130) est configuré pour présenter une force de traction lors de la rotation de la masse d'épreuve (12, 112) dans une première direction.

7. Ensemble masse d'épreuve (10, 50, 110) selon la revendication 1, dans lequel le substrat de quartz (508) comprend en outre une plaque d'amortissement reliée au support de masse d'épreuve (14) et configurée pour limiter une plage de rotation de la masse d'épreuve (12, 112), dans lequel la plaque d'amortissement est formée par gravure sélective au laser.

8. Procédé comprenant :
la gravure sélective au laser d'un premier résonateur (120) à l'intérieur d'un substrat de quartz (508) ;
la gravure sélective au laser d'un second résonateur (130) à l'intérieur d'un substrat de quartz (508) ;
la gravure sélective au laser d'un isolateur de contrainte (24a, 24b) à l'intérieur du substrat de quartz (508) ; et
la gravure sélective au laser d'un élément de flexion (16, 16a, 16b) à l'intérieur du substrat de quartz (508), dans lequel l'élément de flexion (16, 16a, 16b) relie une première partie du substrat à une seconde partie du substrat, dans lequel la première partie du substrat est un support de masse d'épreuve (14), dans lequel la seconde partie du substrat est une masse d'épreuve (12, 112), et dans lequel l'isolateur de contrainte est relié au support de masse d'épreuve (14) et est configuré pour réduire une force de contrainte, de compression ou de tension d'au moins un de la masse d'épreuve (12, 112), du support de masse d'épreuve (14), de l'élément de flexion (16, 16a, 16b), du premier résonateur (120) ou du second résonateur (130) lors de l'application d'une force sur l'ensemble masse d'épreuve (10, 50, 110).

9. Procédé selon la revendication 8, dans lequel la gravure sélective au laser du premier résonateur (120) à l'intérieur du substrat de quartz (508) inclut :
la modification, par un laser, d'une ou plusieurs caractéristiques de parties du premier résonateur (120) ; et
le retrait, par gravure humide, des parties modifiées du premier résonateur (120).

10. Procédé selon la revendication 9, dans lequel la gravure sélective au laser du second résonateur (130) à l'intérieur du substrat de quartz (508) inclut :
la modification, par le laser, d'une ou plusieurs caractéristiques de parties du second résonateur (130) ; et
le retrait, par gravure humide, des parties modifiées du second résonateur (130).

11. Procédé selon la revendication 8, dans lequel le substrat de quartz (508) est un substrat de quartz cristallin (508) ou un substrat monolithique.

12. Procédé selon la revendication 8, comprenant en outre :
la gravure sélective au laser de la masse d'épreuve (12, 112) et du support de masse d'épreuve (14) à l'intérieur du substrat de quartz (508).

13. Accéléromètre à poutre vibrante comprenant :
au moins une plaque d'amortissement ; et
l'ensemble masse d'épreuve (10, 50, 110) selon la revendication 1,
dans lequel la au moins une plaque d'amortissement, l'au moins un isolateur de contrainte et l'ensemble masse d'épreuve (10, 50, 110) comprennent du quartz cristallin.
